# EUROPÄISCHE PATENTSCHRIFT

(11) **EP 2 115 704 B1**
(45) Veröffentlichungstag und Bekanntmachung des Hinweises auf die Patenterteilung: **25.08.2010**
(21) Anmeldenummer: 08701511.1
(22) Anmeldetag: 16.01.2008
(51) Int. Cl.: G07C 9/00, G06K 19/07, B60R 25/00

(54) **GÜTEANPASSUNG EINES EMPFANGSSCHALTKREISES**
QUALITY ADJUSTMENT OF A RECEIVING CIRCUIT
ADAPTATION DE LA QUALITÉ D'UN CIRCUIT DE RÉCEPTION

(30) Priorität: 31.01.2007 DE 102007004814
(43) Veröffentlichungstag der Anmeldung: 11.11.2009
(73) Patentinhaber: Continental Automotive GmbH, 30165 Hannover (DE)
(72) Erfinder: FROITZHEIM, Herbert, 93186 Pettendorf (DE)
(86) Internationale Anmeldenummer: PCT/EP2008/050419
(87) Internationale Veröffentlichungsnummer: WO 2008/092741

(56) Entgegenhaltungen:
- EP-A- 0 710 756
- EP-A- 1 501 044
- DE-A1- 19 642 568
- DE-C1- 4 430 360
- US-A- 5 374 930
- US-A- 6 167 236
- US-A1- 2004 213 169
- US-A1- 2005 237 160

## Beschreibung

Die Erfindung betrifft einen Empfangsschaltkreis für mobile Sende- und Empfangseinrichtungen eines funkbasierten Zugangskontrollsystems. Die Erfindung bezieht sich im Besonderen auf eine gesteuerte Anpassung der Güte des Empfangsschaltkreises an dessen unterschiedliche Nutzungen.

Für moderne Zugangsberechtigungssysteme bzw. Zugangskontrollsysteme werden zunehmend elektronische Sicherungssysteme bzw. Zugangsanordnungen verwendet, bei denen die Authentifizierung eines Zugangsberechtigten mithilfe einer Datenkommunikation erfolgt, die zwischen einer zumeist am Zugangsobjekt wie einem Kraftfahrzeug angeordneten ersten Kommunikationseinrichtung und einer im Besitz der zugangsberechtigten Person befindlichen zweiten Kommunikationseinrichtung, wie beispielsweise in einem elektronischen Schlüssel, stattfindet. Bei den elektronischen Sicherungssystemen wird zwischen aktiven und passiven Zugangsanordnungen unterschieden.

Bei einer aktiven Zugangsanordnung wird von der zweiten Kommunikationseinrichtung ein Identifikationskode an die beispielsweise in einem Fahrzeug angeordnete erste Kommunikationseinrichtung übermittelt. Die Übermittlung wird typischerweise durch Drücken einer entsprechenden Taste an einem mobilen Identifikationsgeber bewirkt. In der zweiten Kommunikationseinrichtung wird der übermittelte Identifikationskode überprüft, und bei Erfolg kann die Sicherungsvorrichtung der Zugangsanordnung entriegelt oder verriegelt werden. Da der Identifikationsgeber von seinem Besitzer willentlich betätigt werden muss, um ihm den Zugang z.B. zu seinem Kraftfahrzeug zu ermöglichen, wird dieses elektronische Zugangssystem als aktive Zugangsanordnung bezeichnet.

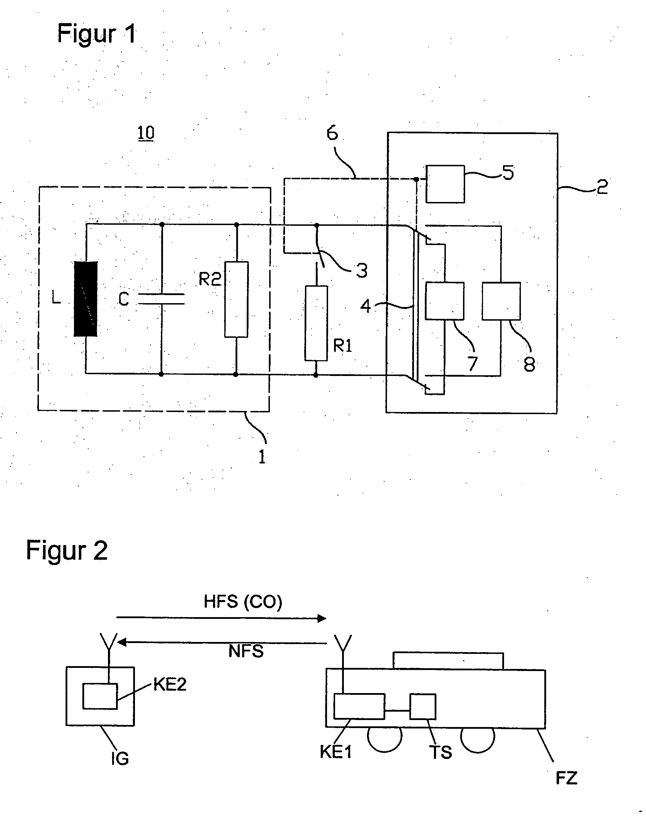

Bei einer passiven Zugangsanordnung, wie sie beispielsweise in Figur 2 schematisch gezeigt ist, sendet die erste Kommunikationseinrichtung KE1 eines Kraftfahrzeugs FZ in regelmäßigen Intervallen Anfragesignale NFS mit einer bestimmten Feldstärke aus. Befindet sich die zweite Kommunikationseinrichtung KE2, die in einem Identifikationsgeber IG wie einem Schlüssel, innerhalb des Wirkungsbereichs der ersten Kommunikationseinrichtung, so kann es deren Anfragesignale empfangen und darauf mit einem Antwortsignal HFS antworten, um einen Authentifizierungsvorgang bzw. Vor-Authentifizierungsvorgang einzuleiten. Die Authentifizierung erfolgt über einen Austausch von Datentelegrammen, die unter anderem auch den Authentifizierungskode CO von der zweiten Kommunikationseinrichtung an die erste Kommunikationseinrichtung übertragen. Verläuft die Authentifizierung erfolgreich, so wird die von der Zugangsanordnung kontrollierte Sicherungsvorrichtung wie ein Türschloss TS entriegelt und kann dann automatisch oder manuell geöffnet werden. Da der Identifikationsgeber im vorgestellten Fall nicht willentlich von seinem Besitzer betätigt werden muss, wird dieses elektronische Zugangssystem im Gegensatz zum oben erläuterten als passive Zugangsanordnung bezeichnet. Passive Zugangsanordnungen werden vorzugsweise für so genannte schlüssellose Fahrzeugzugangssysteme verwendet.

Üblicherweise wird das Anfragesignal NFS im induktiven Frequenzbereich mithilfe eines üblicherweise im kHz-Bereich arbeitenden Niederfrequenzsenders (NF-Senders) ausgesandt und von dem NF-Empfänger der zweiten Kommunikationseinrichtung empfangen. Das empfangene Anfragesignal wird dekodiert und zu einem Antwortsignal HFS weiterverarbeitet, das von der zweiten Kommunikationseinrichtung mit geringer Sendeleistung über einen meist im MHz-Bereich betriebenen Hochfrequenzsender (HF-Sender) an die HF-Sende- und Empfangseinrichtung der ersten Kommunikationseinrichtung übertragen wird.

Das Versenden des NF-Anfragesignals wird als Wecken bezeichnet. Das rasch abnehmende magnetische Feld der von der ersten Kommunikationseinrichtung versandten Anfragesignale begrenzt den Wirkungsbereich der Zugangsanordnung auf einen Funktionsradius von typischerweise weniger als zehn Meter. Der Funktionsradius wird einerseits von der Sendeleistung des NF-Senders, andererseits von der Empfindlichkeit des NF-Empfängers bestimmt. Üblicherweise wird die Schaltungselektronik der zweiten Kommunikationseinrichtung von einem wiederaufladbaren Energiespeicher, beispielsweise einem Akkumulator, mit Strom versorgt. Die Speicherkapazität des Energiespeichers ist naturgemäß sehr gering, um kleine Abmessungen der zweiten Kommunikationseinrichtung zu ermöglichen.

Aufgrund der geringen autarken Stromversorgungskapazität ist der NF-Empfänger der zweiten Kommunikationseinrichtung im Allgemeinen als energieverbrauchsarmer Empfänger ausgebildet. Der NF-Empfänger weist eine Spule zum Empfang des magnetischen Anteils der NF-Funksignale auf, die so genannte Empfangsspule. Um die Empfangsempfindlichkeit des NF-Empfängers zu optimieren, wird ein passender Kondensator parallel zur Empfangsspule geschaltet, wodurch ein Parallelresonanzkreis entsteht, dessen Resonanzfrequenz auf die NF-Sendefrequenz der ersten Kommunikationseinrichtung abgestimmt ist. Das bei der Resonanzüberhöhung erzielte hohe Ausgangssignal des Resonanzkreises gewährleistet eine hohe Empfindlichkeit des Empfängers für die NF-Sendefrequenz der ersten Kommunikationseinrichtung. Hierdurch ist eine Übertragung des Wecksignals mit gutem Signal-zu-Rauschverhältnis möglich.

Die weitere Kommunikation zwischen erster und zweiter Kommunikationseinrichtung verläuft in der Regel in Abhängigkeit von der jeweiligen Entfernung zwischen den beiden Kommunikationseinrichtungen. Zur Bestimmung des Abstands zwischen beiden Einrichtungen wird nach Empfang des Wecksignals die Feldstärke des von der ersten Kommunikationseinrichtung ausgesandten NF-Signals am Ort des NF-Empfängers gemessen. Dies erfolgt über die Messung der Ausgangsspannung des oben beschriebenen Resonanzkreises. Die mit diesem Messverfahren erzielte Genauigkeit der Feldstärkebestimmung wird wesentlich von der Veränderung der Güte und der Resonanzfrequenz des Resonanzkreises durch Bauteiletoleranzen, vor allem auch durch äußere Einflüsse wie z.B. Temperatureinwirkungen bestimmt. Insbesondere bei hohen Güten ist der Einfluss einer Resonanzfrequenzverschiebung durch Kapazitäts- oder Induktivitätsänderungen dominierend. Die Eigenschaften der zum Empfang des magnetischen Anteils der NF-Funksignale ausgebildeten Induktion des Schwingkreises sind stark temperaturabhängig. Ist die Induktion als Luftspule ausgebildet, so verändert sich die Güte des Schwing- bzw. Resonanzkreises durch die starke Temperaturabhängigkeit des spezifischen Widerstands des Spulendrahts. Bei Verwendung einer Ferritkernspule addiert sich hierzu noch der ebenfalls starke Temperaturgang des Ferritkerns. Je nach Umgebungsbedingungen kann die Messung ein und derselben Empfangsfeldstärke daher zu unterschiedlichen Messergebnissen führen.

Um dennoch zu einer ausreichend zuverlässigen Messung zu gelangen, ist es üblich den Schwingkreis z.B. mit einem parallel zu Induktion und Kapazität geschalteten Widerstand zu bedämpfen. Dadurch wird die Resonanzkurve des Parallelschwingkreises verflacht, wodurch sich Temperaturänderungen von Kapazität oder Induktivität weniger stark auf die Schwingkreisresonanz auswirken. Außerdem wird hierdurch eine Stabilisierung der Schwingkreisgüte auf einem niedrigeren Wert erreicht und damit eine stabilere Ausgangsspannung des Resonanzkreises erzielt. Nachteilig hieran ist jedoch, dass die Bedämpfung auch zu einer Reduktion der Resonanzüberhöhung und damit zu einer Erniedrigung der Empfindlichkeit des Empfangsschaltkreises zum Empfang des Wecksignals führt.

Gegenwärtig wird daher stets ein Kompromiss zwischen noch zulässiger Messtoleranz und minimal erforderlicher Empfindlichkeit gesucht, der jedoch für jede der beiden Betriebsmodi einen Abstrich vom Optimum bedeutet.

Falls die autarke Stromversorgung wegen entleerter Batterien nicht mehr möglich ist, ist auch die passive Funktion des Identifikationsgebers nicht mehr gegeben. In diesem Fall wird die Freigabe von Fahrzeugeinrichtungen durch eine Transponderfunktion ersetzt. Hierzu wird die zweite Kommunikationseinrichtung meist in eine dafür vorgesehene Station eingeführt, über die einerseits die Zugriffskontrolle abgewickelt, andererseits über ein induktives NF-Signal ein Energiespeicher der zweiten Kommunikationseinrichtung aufgeladen wird. Im Anschluss an den Aufladevorgang kann eine Kommunikation zwischen der ersten und der zweiten Kommunikationseinrichtung zur Identifikation und anschließenden Freigabe der Fahrzeugeinrichtung erfolgen. Für einen hohen Wirkungsgrad des Aufladevorgangs muss der oben beschriebene Resonanzkreis wie beim Empfang des Wecksignals eine hohe Güte aufweisen. Die mit der gegenwärtig praktizierten Kompromisslösung einhergehende Verringerung der Güte führt jedoch zu einer Beeinträchtigung der Transponderfunktion.

In der Offenlegungsschrift EP 0 710 756 A1 wird eine Modulation der Oszillatorfrequenz des Empfangsschaltkreises eines Identifikationsgebers im Takte des Hin- und Herschaltens zwischen zwei Lastwiderständen des Transponderschwingkreises beschrieben. Das Umschalten wird durch ein steuerbares Schaltelement bewirkt, das von einem Codemodulator angesteuert wird. Die Laständerung führt zu einer Güteänderung des Schwingkreises, worüber Amplitude und Phase der auf den Sender des Identifikationssystems rückwirkenden Energieübertragung moduliert werden.

Die Patentschrift US 5,374,930 offenbart eine Verstimmung des Empfänger-Resonanzkreises hoher Güte durch Zuschalten eines Verstimm-Resonanzkreises niedriger Güte erreicht, wobei das Zuschalten über ein Schaltelement steuerbar ist. Die Verstimmung ändert allerdings nicht nur die Güte, sondern verschiebt auch die Resonanzfrequenz von einer ersten Frequenz f₁ hin zu einer zweiten Frequenz f₃. Damit wird erreicht, dass der Aufladevorgang bei einer zur Datenübertragung verschiedenen Frequenz erfolgen kann, wobei der Empfangsschaltkreis beim Aufladen eine hohe Güte aufweist, um die Energie effektiv übertragen zu können, und bei der mit FSK (Frequency Shift Keying) vorgenommen Datenübertragung eine geringere Güte aufweist, damit beide Modulationsfrequenzen Frequenzen ohne Klirren übertragen werden können.

In der Patentschrift DE 44 30 360 C1 wird ein Senderschaltkreis beschrieben, bei dem der Schwingkreis des Senders durch Zuschalten von Reaktanzen verstimmt wird. Die Verstimmung wird vorgenommen, wenn aufgrund systemimmanenter Nullstellen keine Sollkodeinformation demoduliert wird.

Der Erfindung liegt daher die Aufgabe zugrunde, einen Empfangsschaltkreis für eine zweite Kommunikationseinrichtung einer funkbasierten Zugangsanordnung anzugeben, der eine hohe Empfindlichkeit für den Empfang von Funksignalen und die elektromagnetisch zugeführte Energie besitzt und gleichzeitig eine geringe Messtoleranz bei der Bestimmung der Empfangsfeldstärke aufweist.

Die Aufgabe wird gemäß dem unabhängigen Anspruch der Erfindung gelöst.

Die Erfindung umfasst einen Empfangsschaltkreis für eine Kommunikationseinrichtung einer Zugangsanordnung mit einem, eine Empfangsspule zur Wandlung einer magnetischen Induktion in elektrischen Strom und einen Kondensator umfassenden Resonanzschaltkreis, wobei der Empfangsschaltkreis ferner einen ersten Widerstand und ein zum steuerbaren Verbinden und Trennen des ersten Widerstands mit dem Resonanzschaltkreis ausgebildetes Schaltelement aufweist.

Die Erfindung umfasst auch eine Kommunikationseinrichtung für eine Zugangsanordnung mit einem derartigen Empfangsschaltkreis.

Die Erfindung umfasst ferner ein Verfahren zur Veränderung der Güte eines Resonanzschaltkreises mit einem ersten Schritt zur elektrischen Verbindung des Resonanzschaltkreises mit einem ersten Widerstand, falls sich die Beschaltung des Resonanzschaltkreises von einer ersten Beschaltung zu einer zweiten Beschaltung ändert, und mit einem zweiten Schritt zur elektrischen Trennung des ersten Widerstands von dem Resonanzschaltkreis, falls sich die Beschaltung des Resonanzschaltkreises von der zweiten Beschaltung zur ersten Beschaltung ändert.

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell als nichtabschließende Aufzählung von Merkmalen, wie z.B. Verfahrensschritten, Einrichtungen, Bereichen, Größen und dergleichen aufzufassen ist, die in keiner Weise das Vorhandensein anderer oder zusätzlicher Merkmale oder Gruppierungen von anderen oder zusätzlichen Merkmalen ausschließt.

Die Erfindung ermöglicht eine Anpassung der Güte des Resonanzschaltkreises an die Erfordernisse dessen Beschaltung. Insbesondere kann so für den Empfang von weiterzuverarbeitenden NF-Signalen der Resonanzkreis mit hoher Güte betrieben werden, während bei der Messung der Feldstärke der NF-Signale der Resonanzkreis mit dem ersten Widerstand soweit bedämpft wird, dass dessen Güte genügend verringert wird, um eine geringe Messtoleranz zu gewährleisten.

Die Erfindung wird in ihren abhängigen Ansprüchen weitergebildet.

Um eine gute Empfindlichkeit des Empfangsschaltkreises zu erzielen, sind Empfangsspule und Kondensator vorzugsweise in Parallelschaltung angeordnet. Alternativ hierzu können Empfangsspule und Kondensator auch in Serienschaltung angeordnet sein, wobei insbesondere auch eine Kombination der von Parallel- und Serienschaltung unter Einsatz mehrerer dieser Bauelemente verwendet werden kann.

Zur elektrischen Anbindung des ersten Widerstands an den Resonanzschaltkreis weist das Schaltelement vorteilhaft einen ersten Schaltzustand zum Verbinden von Resonanzschaltkreis und erstem Widerstand in Parallelschaltung auf. Alternativ oder zusätzlich kann der erste Schaltzustand des Schaltelements auch zum Verbinden von Resonanzschaltkreis und erstem Widerstand in serieller Schaltung ausgebildet sein. Ferner kann das Trennen einer elektrischen Verbindung zwischen dem Resonanzschaltkreis und dem ersten Widerstand einfach realisiert werden, indem das Schaltelement einen zweiten Schaltzustand zum Trennen einer elektrischen Verbindung zwischen Resonanzschaltkreis und dem ersten Widerstand aufweist. Die Trennung kann "unipolar", d.h. durch Trennen von nur einer der zur elektrischen Verbindung von erstem Widerstand und Resonanzschaltkreis ausgebildeten Leitungen erfolgen, aber auch "bipolar" durch Trennen beider zur elektrischen Verbindung von erstem Widerstand und Resonanzschaltkreis ausgebildeten Leitungen.

Für eine genaue Anpassung der Güte an die Erfordernisse des Empfangs von zur Weiterverarbeitung bestimmten Signalen oder von zur Aufladung des Energiespeichers bestimmten Signalen, umfasst der Resonanzkreis vorteilhaft einen weiteren Widerstand, der parallel oder seriell zur Empfangsspule und/oder zum Kondensator geschaltet ist.

Weitere Merkmale der Erfindung ergeben sich aus der folgenden Beschreibung erfindungsgemäßer Ausführungsbeispiele in Verbindung mit den Ansprüchen sowie den Figuren. Die einzelnen Merkmale können bei einer Ausführungsform gemäß der Erfindung je für sich oder zu mehreren verwirklicht sein. Bei der nachfolgenden Erläuterung einiger Ausführungsbeispiele der Erfindung wird auf die beiliegenden Figuren Bezug genommen. Dabei zeigt:
- Figur 1: ein stark vereinfachtes Blockschaltbild eines Emp- fangsschaltkreises mit Gütesteuerung gemäß eines Ausführungsbeispiels der Erfindung;
- Figur 2: eine Zugangsanordnung für ein Kraftfahrzeug umfas- send als wesentliche Bestandteile eine erste Kommu- nikationseinrichtung auf Seiten eines Kraftfahr- zeugs sowie eine zweite Kommunikationseinrichtung auf Seiten eines Identifikationsgebers eines Benut- zers, wobei der in Figur 1 gezeigte Empfangsschalt- kreis beispielsweise auch in der zweiten Kommunika- tionseinrichtung realisiert werden kann.

Der in der Figur 1 dargestellte Empfangsschaltkreis 10 weist einen zum Empfang von NF-Funksignalen ausgebildeten Resonanzschaltkreis 1 und eine nachfolgende Schaltungseinrichtung 2 auf. Der Resonanzschaltkreis umfasst eine Empfangsspule L und einen dazu parallel geschalteten Kondensator C. Die Empfangsspule L kann als Luftspule oder als Spule mit einem Ferritkern ausgeführt sein. Zur Reduktion des durch den Spulendraht und den eventuellen Ferritkern der Empfangsspule verursachten Temperaturgangs der Güte des Resonanzkreises 1 kann ein Widerstand R2 parallel zu Empfangsspule L und Kondensator C geschaltet werden. Der Wert des Widerstands R2 wird so hoch gewählt, dass sich die Resonanzüberhöhung des Resonanzschaltkreises nicht wesentlich ändert. Um beispielsweise einen auf 125 kHz optimierten Empfang hoher Güte zu ermöglichen, kann die Empfangsspule L mit einer Induktivität von 2mH, der Kondensator C mit einer Kapazität von 680 pF und der Widerstand R2 mit 80 kOhm ausgeführt werden. Es ist jedoch selbstverständlich, dass die Elemente des Resonanzkreises 1 auch mit anderen Werten und auch für eine andere Resonanzfrequenz ausgeführt werden können.

Das der nachfolgenden Schaltungseinrichtung 2 zugeführte Ausgangssignal des Resonanzkreises liegt über den parallel geschalteten Komponenten L, C und eventuell R2 an. Die nachfolgende Schaltung 2 weist eine erste Beschaltung 7 und eine zweite Beschaltung 8 auf.

Die erste Beschaltung 7 umfasst alle Schaltungskomponenten, die zur nachrichtentechnischen Verarbeitung der empfangenen NF-Signale erforderlich sind. Weist die den Empfangsschaltkreis aufnehmenden Kommunikationseinrichtung ferner eine Transponderfunktion zum Aufladen eines Energiespeichers auf, so sind auch die hierfür enthaltenen Schaltkreise in der ersten Beschaltung 7 enthalten.

Die zweite Beschaltung 8 umfasst alle Schaltungskomponenten, die zur Messung des die Feldstärke eines NF-Signals am Ort der Empfangsspule L repräsentierenden Ausgangssignals des Resonanzschaltkreises erforderlich sind. Da bei der hohen Güte des Resonanzkreises 1 die Messtoleranz zu hoch wäre, um eine ausreichend genaue Bestimmung der Feldstärke zu ermöglichen, muss der Resonanzkreis 1 stärker bedämpft werden. Hierzu dient der Widerstand R1, der in der gezeigten Anordnung parallel mit dem Ausgang des Resonanzschaltkreises verbunden werden kann. Der Widerstand R1 erhöht den Leitwert parallel zu den Komponenten des Resonanzschaltkreises 1 und bewirkt so dessen Bedämpfung, die zu einer Reduktion der Amplitude und einer Aufweitung der Breite der Resonanzkurve des Parallelschwingkreises 1 führt.

Die nachfolgende Schaltungseinrichtung 2 weist ferner eine Beschaltungssteuerung 5 auf, die die Schaltzustände der Schaltelemente 3 und 4 steuert. Die Schaltzustände der beiden Schaltelemente 3 und 4 sind so aufeinander abgestimmt, dass der Widerstand R1 vom Resonanzschaltkreis getrennt ist, wenn der Ausgang des Resonanzschaltkreises mit der ersten Beschaltung 7 verbunden ist, und mit dem Resonanzschaltkreis verbunden ist, wenn der Ausgang des Resonanzschaltkreises mit der zweiten Beschaltung 8 verbunden ist. Mit anderen Worten befindet sich das Schaltelement 3 in der gezeigten Darstellung im geöffneten, d.h. leitungsunterbrechenden Schaltzustand, wenn das Schaltelement 4 den Parallelschwingkreis mit der Beschaltung 7 verbindet; die Beschaltungssteuerung steuert das Schaltelement 3 in den geschlossenen, d.h. leitungsverbindenden Schaltzustand, wenn das Schaltelement 4 den Parallelschwingkreis mit der für die Feldstärkemessung vorgesehenen Beschaltung 8 verbindet.

Die Steuerung der beiden Schaltelemente 3 und 4 durch die Beschaltungssteuerung 5 erfolgt über die Steuerleitung 6 bzw. über mehrere Steuerleitungen 6. Die Steuerung der beiden Schaltelemente 3 und 4 kann dabei synchron aber auch asynchron erfolgen.

In Figur 1 ist das Schaltelement als einfacher Schalter ausgeführt. Eine Ausführung als Doppelschalter zur Trennung beider Anschlüsse des Widerstands R1 vom Ausgang des Resonanzschaltkreises ist ebenfalls möglich, insbesondere wenn parasitäre Effekte des einseitig angeschlossenen Widerstands zu befürchten sind. Da einer der Anschlüsse des Resonanzkreises 1 im Allgemeinen mit dem Massepotential des Empfangsschaltkreises verbunden ist, kann das in der Figur 1 als Doppelumschalter ausgeführte Schaltelement 4 auch als einfacher Umschalter realisiert werden, wobei das Massepotential des Resonanzkreises 1 stets mit den Massepotentialen der Beschaltungen 7 und 8 verbunden ist, und der Umschalter 4 den anderen Anschluss des Resonanzschaltkreises 1 wahlweise mit dem nicht auf Masse liegenden Eingang der Beschaltung 7 oder der Beschaltung 8 verbindet.

Die Schaltelemente 3 und 4 können prinzipiell als elektromechanische Komponenten ausgeführt werden; im Interesse einer kurzen Ansprechzeit und zum Vermeiden eines Kontaktprellens sind sie jedoch zweckmäßigerweise in Form von elektronischen Komponenten, vorzugsweise unter Verwendung von Transistoren, ausgebildet.

Es sei darauf hingewiesen, dass in die stark vereinfachte Darstellung der Figur 1 nur diejenigen Komponenten aufgenommen sind, die für das Verständnis der Erfindung erforderlich sind. Die Einbindung weiterer Komponenten, die für den Betrieb des Empfangsschaltkreises oder für die Erweiterung dessen Funktionsumfangs erforderlich sind, wurde im Hinblick auf eine klare Darstellung unterlassen. Dennoch sind diese Komponenten als vorhanden unterstellt.

Die Messung der Feldstärke des empfangenen NF-Signals (NFS, vgl. Figur 2) wird nur vorgenommen, wenn eine Abstandsbestimmung zwischen den beiden Kommunikationseinrichtungen der Zugangsanordnung erforderlich ist. Im Übrigen befindet sich der Empfangsschaltkreis im Grundzustand, bei dem der Ausgang des Resonanzschaltkreises mit der ersten Beschaltung 7, d.h. der Signalverarbeitung zum Zwecke der Nachrichtenübermittlung und gegebenenfalls der Transponderfunktion zum induktiven Energietransfer, verbunden ist. Im Grundzustand ist der Widerstand R1 vom Resonanzkreis 1 elektrisch getrennt, wodurch eine sehr geringe Bedämpfung des Schwingkreises 1 und dadurch eine hohe Signalgüte bei der Nachrichtenübertragung bzw. ein hoher Wirkungsgrad bei der Energieübertragung erreicht werden.

Im Messzustand ist der Widerstand R1 mit dem Schwingkreis 1 verbunden, dessen Ausgang mit der Beschaltung 8 verbunden ist, die den Schaltkreis zur Messung der Empfangsfeldstärke enthält. Durch die zusätzliche Bedämpfung des Resonanzschaltkreises 1 mit dem Widerstand R1 wird die Güte des Schwingkreises 1 reduziert und damit die Messgenauigkeit der Empfangsfeldstärke erhöht. Die geringeren Amplituden des Ausgangssignals bei der erhöhten Dämpfung können durch eine höhere Verstärkung kompensiert werden. Da die Messung nur zeitweise und über einen kurzen Zeitraum erfolgt, führt der mit der Verstärkung verbundene erhöhte Stromverbrauch zu keiner nennenswerten Erhöhung des Gesamtenergieverbrauchs des Empfangsschaltkreises, wodurch insgesamt ein energieverbrauchsarmer Empfangsschaltkreis 10 mit guter Empfangsqualität, hohem Wirkungsgrad der Energieübertragung und geringer Messtoleranz bei der Feldstärkebestimmung erreicht wird.

Auch wenn die detaillierte Darstellung der Erfindung unter Bezugnahme auf einen in Parallelschaltung ausgebildeten Empfangsschaltkreis erfolgte, wird darauf hingewiesen, dass die Erfindung nicht darauf beschränkt ist, sondern auch Empfangsschaltkreise mit einer Serienschaltung von Empfangsspule und Kondensator und auch gemischte Serien-/Parallelschaltungen von einer oder mehreren Empfangsspulen mit einem oder mehreren Kondensatoren und Widerständen umfasst.

Wie bereits oben erwähnt, kann der Empfangsschaltkreis 10 beispielsweise in einer zweiten Kommunikationseinrichtung KE2 installiert sein. Auf diese Weise lässt sich somit eine gegenüber dem Stand der Technik verbesserte Zugangsanordnung für ein Fahrzeug FZ realisieren.

### Bezugszeichenliste

- 1: Resonanzschaltkreis
- 2: nachfolgende Schaltungseinrichtung
- 3: Schaltelement
- 4: Umschalteinrichtung
- 5: Beschaltungssteuerung
- 6: Steuerleitung
- 7: Signalverarbeitung / Aufladeeinrichtung
- 8: Messeinrichtung
- 10: Empfangsschaltkreis
- L: Empfangsspule
- C: Kondensator
- R1: erster Widerstand
- R2: zweiter Widerstand
- IG: Identifikationsgeber
- FZ: Kraftfahrzeug
- HFS: Hochfrequenzsignal
- NFS: Niederfrequenzsignal
- CO: Authentifizierungscode
- KE1: fahrzeugseitige (erste) Kommunikationseinrichtung
- KE2: identifikationsgeberseitige (zweite) Kommunikations- einrichtung
- TS: Türschloss/Sicherheitseinrichtung

## Patentansprüche

1. Empfangsschaltkreis für eine Kommunikationseinrichtung einer Zugangsanordnung mit
- einem Resonanzschaltkreis (1) , der eine Empfangsspule (L) zur Wandlung einer magnetischen Induktion in elektrischen Strom und einen Kondensator (C) umfasst,
- einer ersten Beschaltung (7), die zur nachrichtentechnischen Verarbeitung der über den Resonanzschaltkreis (1) empfangenen Signale und zum Aufladen eines Energiespeichers ausgebildet ist,
- einer zweiten Beschaltung (8), die zur Messung der Empfangsfeldstärke am Ort der Empfangsspule (L) ausgebildet ist,
- einem ersten Widerstand (R1), der über ein steuerbares Schaltelement (3) mit dem Resonanzschaltkreis (1) verbindbar angeordnet ist,
- einer steuerbaren Umschalteinrichtung (4), die den Resonanzkreis (1) wahlweise mit der ersten Beschaltung (7) oder der zweiten Beschaltung (8) verbindet, und
- einer Beschaltungssteuerung (5), die dazu ausgebildet ist, das steuerbare Schaltelement (3) und die Umschalteinrichtung (4) so zu steuern, dass der erste Widerstand (R1) dann mit dem Resonanzschaltkreis (1) verbunden ist, wenn die zweite Beschaltung (8) mit dem Resonanzschaltkreis (1) verbunden ist.

2. Empfangsschaltkreis nach Anspruch 1,
**dadurch gekennzeichnet,**
**dass** Empfangsspule (L) und Kondensator (C) in Parallelschaltung angeordnet sind.

3. Empfangsschaltkreis nach Anspruch 1 oder 2,
**dadurch gekennzeichnet,**
**dass** Empfangsspule (L) und Kondensator (C) in Serie geschaltet angeordnet sind.

4. Empfangsschaltkreis nach Anspruch 1, 2 oder 3,
**dadurch gekennzeichnet,**
**dass** das Schaltelement (3) einen ersten Schaltzustand zum Verbinden von Resonanzschaltkreis (1) und erstem Widerstand (R1) in Parallelschaltung aufweist.

5. Empfangsschaltkreis nach einem der vorangehenden Ansprüche,
**dadurch gekennzeichnet,**
**dass** der Resonanzschaltkreis (1) einen weiteren Widerstand (R2) umfasst, der parallel oder seriell zur Empfangsspule (L) und/oder zum Kondensator (C) geschaltet ist.

6. Kommunikationseinrichtung für eine Zugangsanordnung mit einem Empfangsschaltkreis (10) nach einem der vorangehenden Ansprüche.

7. Zugangsanordnung mit folgenden Merkmalen:
- einer ersten Kommunikationseinrichtung (KE1) zum Aussenden zumindest eines Anfragesignals (NFS) im induktiven Frequenzbereich;
- einer zweiten Kommunikationseinrichtung (KE2) mit einem Empfangsschaltkreis (10) nach einem der Ansprüche 1 bis 5 zum Empfangen und Verarbeiten des Anfragesignals im induktiven Frequenzbereich.

8. Verfahren zur Veränderung der Güte eines Resonanzschaltkreises mit
- einem ersten Schritt zur elektrischen Verbindung des Resonanzschaltkreises (1) mit einem ersten Widerstand (R1), falls sich die Beschaltung des Resonanzschaltkreises (1) von einer ersten Beschaltung (7), die zur nachrichtentechnischen Verarbeitung der über den Resonanzschaltkreis (1) empfangenen Signale und zum Aufladen eines Energiespeichers ausgebildet ist, zu einer zweiten Beschaltung (8) ändert, die zur Messung der Empfangsfeldstärke am Ort der Empfangsspule (L) ausgebildet ist, und mit
- einem zweiten Schritt zur elektrischen Trennung des ersten Widerstands (R1) von dem Resonanzschaltkreis (1), falls sich die Beschaltung des Resonanzschaltkreises (1) von der zweiten Beschaltung (8) zur ersten Beschaltung (7) ändert.

9. Verfahren nach Anspruch 8,
**dadurch gekennzeichnet,**
**dass** das elektrische Verbinden und das elektrische Trennen von Resonanzschaltkreis (1) und erstem Widerstand (R1) an nur einer der zur der elektrischen Verbindung beider ausgebildeten Leitungen vorgenommen werden.

## Claims

1. Receiving circuit for a communication device of an access arrangement having
- a resonant circuit (1) which comprises a receiving coil (L) for converting magnetic induction into electrical current, and a capacitor (C),
- first circuitry (7), which is designed for telecommunications processing of the signals received via the resonant circuit (1) and for charging an energy store,
- second circuitry (8), which is designed for measuring the reception field strength at the location of the reception coil (L),
- a first resistor (R1), which is arranged in such a way that it can be connected to the resonant circuit (1) via a controllable switching element (3),
- a controllable switching element (4) which connects the resonant circuit (1) either to the first circuitry (7) or to the second circuitry (8), and
- a circuitry controller (5) which is designed to control the controllable switching element (3) and the switching device (4) in such a way that the first resistor (R1) is connected to the resonant circuit (1) when the second circuitry (8) is connected to the resonant circuit (1).

2. Receiving circuit according to Claim 1,
**characterized**
**in that** the receiving coil (L) and the capacitor (C) are arranged in a parallel connection.

3. Receiving circuit according to Claim 1 or 2,
**characterized**
**in that** the receiving coil (L) and the capacitor (C) are arranged connected in series.

4. Receiving circuit according to Claim 1, 2 or 3,
**characterized**
**in that** the switching element (3) has a first switched state for connecting the resonant circuit (1) and first resistor (R1) in a parallel connection.

5. Receiving circuit according to one of the preceding claims,
**characterized**
**in that** the resonant circuit (1) comprises a further resistor (R2) which is connected in parallel or in series with the receiving coil (L) and/or the capacitor (C).

6. Communication device for an access arrangement having a receiving circuit (10) according to one of the preceding claims.

7. Access arrangement having the following features:
- a first communication device (KE1) for emitting at least one interrogation signal (NFS) in the inductive frequency range;
- a second communication device (KE2) having a receiving circuit (10) according to one of Claims 1 to 5 for receiving and processing the interrogation signal in the inductive frequency range.

8. Method for changing the quality of a resonant circuit with
- a first step for electrically connecting the resonant circuit (1) to a first resistor (R1) if the circuitry of the resonant circuit (1) changes from first circuitry (7), which is designed for the telecommunications processing of the signals received via the resonant circuit (1) and for charging an energy store, to second circuitry (8), which is designed for measuring the reception field strength at the location of the reception coil (L), and with
- a second step for electrically disconnecting the first resistor (R1) from the resonant circuit (1) if the circuitry of the resonant circuit (1) changes from the second circuitry (8) to the first circuitry (7).

9. Method according to Claim 8,
**characterized**
**in that** the electrical connection and the electrical disconnection of the resonant circuit (1) and first resistor (R1) are performed at just one of the lines which are designed for the electrical connection of said resonant circuit (1) and first resistor (R1).

## Revendications

1. Circuit de réception pour un dispositif de communication d'un arrangement d'accès comprenant
- un circuit de résonance (1), qui comprend une bobine de réception (L) pour la conversion d'une induction magnétique en courant électrique et un condensateur (C),
- un premier câblage (7), qui est conçu pour le traitement de communication des signaux reçus par le circuit de résonance (1) et pour le chargement d'un accumulateur d'énergie,
- un second câblage (8), qui est conçu pour mesurer l'intensité du champ de réception à l'emplacement de la bobine de réception (L),
- une première résistance (R1), qui est disposée de façon à pouvoir être reliée par un élément de commutation (3) contrôlable au circuit de résonance (1),
- un dispositif de commutation (4) contrôlable, qui relie le circuit de résonance (1) au choix au premier câblage (7) ou au second câblage (8) et
- une commande de câblage (5), qui est conçue pour commander l'élément de commutation (3) contrôlable et le dispositif de commutation (4) de telle sorte que la première résistance (R1) soit alors reliée au circuit de résonance (1) dans le cas où le second câblage (8) est relié au circuit de résonance (1).

2. Circuit de réception selon la revendication 1,
**caractérisé en ce que**
la bobine de réception (L) et le condensateur (C) sont disposés dans un montage en parallèle.

3. Circuit de réception selon la revendication 1 ou 2,
**caractérisé en ce que**
la bobine de réception (L) et le condensateur (C) sont disposés dans un montage en série.

4. Circuit de réception selon la revendication 1, 2 ou 3,
**caractérisé en ce que**
l'élément de commutation (3) présente un premier état de commutation pour relier le circuit de résonance (1) et la première résistance (R1) dans un montage en parallèle.

5. Circuit de réception selon l'une quelconque des revendications précédentes,
**caractérisé en ce que**
le circuit de résonance (1) comprend une autre résistance (R2) qui est montée en parallèle ou en série par rapport à la bobine de réception (L) et/ou au condensateur (C).

6. Dispositif de communication pour un arrangement d'accès avec un circuit de réception (10) selon l'une quelconque des revendications précédentes.

7. Arrangement d'accès présentant les caractéristiques suivantes :
- un premier dispositif de communication (KE1) pour l'émission d'au moins un signal de demande (NFS) dans la plage de fréquence inductive ;
- un second dispositif de communication (KE2) avec un circuit de réception (10) selon l'une quelconque des revendications 1 à 5 pour la réception et le traitement du signal de demande dans la plage de fréquence inductive.

8. Procédé pour modifier la qualité d'un circuit de résonance comprenant
- une première étape pour la liaison électrique du circuit de résonance (1) avec une première résistance (R1) dans le cas où le câblage du circuit de résonance (1) allant d'un premier câblage (7) conçu pour le traitement de communication des signaux reçus par le circuit de résonance (1) et pour le chargement d'un accumulateur d'énergie, à un second câblage (8) conçu pour mesurer l'intensité du champ de réception à l'emplacement de la bobine de réception (L), varie et
- une seconde étape pour la séparation électrique de la première résistance (R1) du circuit de résonance (1) dans le cas où le câblage du circuit de résonance (1) allant du second câblage (8) au premier câblage (7) varie.

9. Procédé selon la revendication 8,
**caractérisé en ce que**
la liaison électrique et la séparation électrique du circuit de résonance (1) et de la première résistance (R1) sont effectuées sur uniquement l'une des deux lignes conçues pour la liaison électrique.
